# EUROPÄISCHE PATENTSCHRIFT

(11) **EP 2 638 940 B1**
(45) Veröffentlichungstag und Bekanntmachung des Hinweises auf die Patenterteilung: **30.05.2018**
(21) Anmeldenummer: 13157591.2
(22) Anmeldetag: 04.03.2013
(51) Int. Cl.: B01D 29/01, B01D 29/11, B01D 29/70

(54) **Wasserführendes Haushaltsgerät mit einem einstellbaren Filter**
Water-conducting domestic appliance with an adjustable filter
Appareil ménager transportant de l'eau doté d'un filtre réglable

(30) Priorität: 12.03.2012 DE 102012203784
(43) Veröffentlichungstag der Anmeldung: 18.09.2013
(73) Patentinhaber: BSH Hausgeräte GmbH, 81739 München (DE)
(72) Erfinder: Bischof, Andreas, 10407 Berlin (DE); Eglmeier, Hans, 10587 Berlin (DE); Hanau, Andreas, 12359 Berlin (DE)

(56) Entgegenhaltungen:
- EP-A1- 1 690 579
- WO-A1-2008/075327
- WO-A1-2009/142389
- WO-A2-2009/004612
- WO-A2-2011/068334
- DE-A1- 10 101 313
- GB-A- 2 136 307
- JP-A- S63 252 516
- US-A- 5 690 825
- US-A1- 2008 011 659
- US-A1- 2008 282 669

## Beschreibung

Die Erfindung betrifft ein Filter, das sich insbesondere für wasserführende Haushaltsgeräte eignet, sowie ein wasserführendes Haushaltsgerät mit einem Filter, das insbesondere als Wäschebehandlungsgerät zum Waschen von Wäsche dient. Speziell betrifft die Erfindung das Gebiet der Waschmaschinen und Waschtrockner.

Aus der EP 1 349 480 B1 ist eine Geschirrspülmaschine mit einem Sieb bekannt. Das Sieb weist Sieböffnungen auf. Die Sieböffnungen sind durch Elemente verdeckt oder überdeckt, deren Form oder Lage gegenüber den Sieböffnungen unter dem Einfluss der Wärme eines das Sieb durchsetzenden Mediums veränderbar ist. Das Sieb weist einen plattenförmigen Körper auf, der zwei Einsätze trägt, deren Material aus einer Formgedächtnislegierung besteht. Derartige Legierungen ändern unter dem Einfluss von Wärme ihre Form oder Lage. Beim Erreichen einer bestimmten Temperatur nehmen sie eine andere Form an oder eine andere Lage ein und kehren wieder in die ursprüngliche Form oder Lage zurück, wenn wieder die ursprüngliche Temperatur herrscht. An den Einsätzen des Siebs sind zungenartige Laschen ausgestanzt. Diese zungenartigen Laschen ändern unter dem Einfluss von Wärme ihre Lage. So tritt bei einer bestimmten Temperatur ein Verbiegen oder Verschwenken dieser Laschen auf. Durch dieses Verbiegen oder Verschwenken der Laschen entstehen entsprechend große Durchtrittsöffnungen in den Einsätzen.

Die aus der EP 1 349 480 B1 bekannte Geschirrspülmaschine und das bekannte Sieb haben den Nachteil, dass die Ausgestaltung des Siebs aufwändig ist. Dadurch ergeben sich hohe Herstellungskosten. Außerdem wird die Funktionsweise des bekannten Siebs durch Verschmutzungen beeinträchtigt, da die Formgedächtnislegierung die zungenartigen Laschen dann nicht mehr in ihre Ausgangslage zurückschwenken kann. Die Filterwirkung verschlechtert sich dann dahingehend, dass Schmutzpartikel auch bei niedrigen Temperaturen das Filter passieren können. Außerdem ist der Anwendungsbereich des bekannten Filters begrenzt, da das Schalten unter dem Einfluss von Wärme erfolgt und somit kein gezieltes Ansteuern des Filters, sondern nur ein indirektes Schalten möglich ist. Ferner erfolgt das Umschalten beim Erwärmen und Abkühlen nur mit einer gewissen Verzögerung.

Aus der US 3,018,891 A ist eine Gummischicht bekannt, die beispielsweise durch Vulkanisieren mit einer Metallplatte verbunden ist. Ferner ist ein Verfahren angeben, um Ausstanzungen sowohl in der Gummischicht als auch in der Metallplatte auszubilden.

Aus der WO 2009/142389 A1 ist eine Filtereinrichtung mit einem variablen Filter bekannt, bei dem eine Porengröße des Filters durch eine Kompressionskraft variiert werden kann.

Aufgabe der Erfindung ist es, ein Filter und ein wasserführendes Haushaltsgerät mit solch einem Filter zu schaffen, die einen verbesserten Aufbau aufweisen. Speziell ist es eine Aufgabe der Erfindung, ein Filter, das auf mechanische Weise möglichst stufenlos einstellbar ist, sowie ein wasserführendes Haushaltsgerät mit solch einem Filter zu schaffen.

Die Aufgabe wird durch ein Filter, das insbesondere für wasserführende Haushaltsgeräte dient, mit den Merkmalen des Anspruchs 1 gelöst. Ferner wird die Aufgabe durch ein wasserführendes Haushaltsgerät mit solch einem Filter gelöst.

Durch die in den abhängigen Patentansprüchen aufgeführten Maßnahmen sind vorteilhafte Weiterbildungen des erfindungsgemäßen Filters und des erfindungsgemäßen wasserführenden Haushaltsgeräts möglich.

Bei der Ausgestaltung von wasserführenden Haushaltsgeräten gibt es insbesondere das Ziel, die Wasserersparnis im Wasch- und Spülprozess unter Beibehaltung oder sogar Verbesserung des Wasch- und Spülergebnisses zu maximieren. Dies kann durch die Wiederverwendung des Wasch- und Spülwassers und durch eine vorteilhafte Gestaltung des Wäschepflegeprozesses erreicht werden. Hierfür kann beispielsweise ein Filtersystem zum Einsatz kommen, das durch eine einstellbare Porengröße unterschiedlichste Schmutzpartikel, Waschmittelrückstände und sonstige gelöste und ungelöste Bestandteile des Prozesswassers herausfiltert. Diese Filterung wird eingesetzt, um während des Wasch- oder Spülprozesses Bestandteile aus dem Wasser zu filtern oder um das Wasser vor einer Speicherung in einem Tank zu säubern. Hierbei können auch während der Speicherung entstehende Partikel aus dem Prozesswasser herausgefiltert werden.

Ein weiterer Einsatzbereich eines Filters, das speziell bei wasserführenden Haushaltsgeräten zum Einsatz kommen kann, besteht in der Filterung von Luft. Beispielsweise können im Wäschetrockner Partikel und Flusen aus der umgepumpten Luft zurückgehalten werden. Hierbei ist auch eine Filterung der von dem Wäschetrockner angesaugten Luft und/oder der von dem Wäschetrockner ausgeblasenen Luft möglich.

Bei einem Wäschebehandlungsgerät zum Waschen von Wäsche besteht der Wäschepflegeprozess in der Regel aus mehreren Schritten, nämlich einer Vorwäsche, einer Hauptwäsche und mehreren Spülschritten, bei denen jeweils unterschiedliche Arten von verschmutzten Wassermengen anfallen. Diese Wassermengen können aus dem Wäschebehandlungsgerät abgeleitet und durch Frischwasser ersetzt werden, wie es bei einer Waschmaschine in der Regel der Fall ist, oder über unterschiedliche Filter umgepumpt werden, um im aktuellen Prozessschritt weniger verschmutzt zur Verfügung zu stehen, wie es in der Regel bei einer Geschirrspülmaschine der Fall ist. Da unterschiedliche Arten von Schmutz anfallen und ein Zusetzen der Filter verhindert werden soll, ist es denkbar, dass mehrere Filter mit unterschiedlichen Maschen- oder Porenweiten zum Einsatz kommen. Dies erhöht jedoch die Herstellungskosten. Vorteilhaft ist daher die Ausgestaltung mit einem Filter, das mehrere Filter ersetzt, indem es sich an die jeweils aktuellen Anforderungen anpassen lässt. Speziell können die durch die offenen Ausnehmungen gebildeten Poren zum Reinigen geöffnet werden. Das adaptive Filter ermöglicht somit eine Einstellung der Durchlässigkeit. Hierbei kann in dem jeweiligen Prozessschritt die gewünschte Filterwirkung des Filters eingestellt werden. Je nach Ausgestaltung ist hierbei ein vom Anströmdruck unabhängiges Öffnen möglich. Möglich ist es auch, dass zum Reinigungsspülen oder Rückspülen die offenen Ausnehmungen vergrößert werden.

Somit kann in vorteilhafter Weise die Durchlässigkeit des Filters an die aktuellen Anforderungen im Filtrationsprozess angepasst werden.

Erfindungsgemäß erstrecken sich die offenen Ausnehmungen senkrecht zu einer Filterseite der Filterschicht durch die Filterschicht. Die elastisch verformbare Filterschicht ist entlang einer beziehungsweise entlang der jeweiligen Erstreckungsrichtung der offenen Ausnehmungen streck- und/oder stauchbar. Hierdurch kann gewissermaßen die Höhe der Filterschicht entlang der Erstreckung vergrößert beziehungsweise verringert werden, um die durch die offenen Ausnehmungen erzielte Filterwirkung zu variieren. Speziell kann hierdurch der Querschnitt, insbesondere ein Durchmesser, der offenen Ausnehmungen verändert werden.

Oder die elastisch verformbare Filterschicht ist senkrecht zu einer beziehungsweise senkrecht zu der jeweiligen Erstreckungsrichtung der offenen Ausnehmungen streck- und/oder stauchbar. Hierdurch ist ebenfalls eine Variation der Filterwirkung möglich.

Vorteilhaft ist es, dass zumindest ein Teil der offenen Ausnehmungen der Filterschicht als im Ausgangszustand näherungsweise im wesentlichen zylinderförmige, insbesondere zylinderförmige, Ausnehmungen ausgestaltet sind. Je nach Ausgestaltung kann beim Strecken oder Stauchen die Größe der zylinderförmigen Ausnehmungen so variiert werden, dass die zylinderförmige Ausgestaltung erhalten bleibt oder dass beispielsweise ein elliptischer Querschnitt entsteht. Es sind auch andere Ausgestaltungen möglich. Vorteilhaft ist es nämlich auch, dass zumindest ein Teil der offenen Ausnehmungen der Filterschicht als Ausnehmungen mit im Ausgangszustand ellipsenförmigen oder eiförmigen Querschnitt oder als quaderförmige Aussparungen ausgestaltet sind. Auch beliebige Kombinationen solcher Ausgestaltungen sind möglich.

Ferner ist es vorteilhaft, dass die elastisch verformbare Filterschicht zumindest im Wesentlichen aus einem Werkstoff gebildet ist, der eine Querdehnzahl aus einem Bereich von etwa 0,2 bis etwa 0,5 aufweist. Ferner ist es besonders vorteilhaft, dass die elastisch verformbare Filterschicht zumindest im Wesentlichen aus einem Werkstoff gebildet ist, der eine Querdehnzahl aus einem Bereich von etwa 0,4 bis etwa 0,5 aufweist. Speziell ist es vorteilhaft, dass die elastisch verformbare Filterschicht zumindest im Wesentlichen aus einem Werkstoff gebildet ist, der eine Querdehnzahl von etwa 0,5 aufweist. Die Querdehnzahl gibt hierbei das Verhältnis zwischen einer Querkontraktion und einer Längsdehnung bei einachsiger Längsspannung an. Insbesondere kann ein auf Gummi basierender Werkstoff und/oder ein elastischer Kunststoff und/oder ein gummielastischer Werkstoff, vorzugsweise ein auf Gummi basierender Werkstoff, zum Einsatz kommen, der eine Querdehnzahl von etwa 0,5 hat. Die Filterschicht kann hierdurch aus einem Werkstoff gebildet werden, der zumindest näherungsweise Volumenkonstanz im Streck- oder Stauchprozess hat.

In vorteilhafter Weise kann die elastisch verformbare Filterschicht als ebene Filterschicht ausgestaltet sein. Hierdurch können die Verformungskräfte in einfacher Weise auf die Filterschicht übertragen werden.

Vorteilhaft ist es allerdings auch, dass die elastisch verformbare Filterschicht als schlauchförmige Filterschicht ausgestaltet ist. Hierbei ist es ferner vorteilhaft, dass an einem ersten Ende der schlauchförmigen Filterschicht ein Einlass in einen Innenraum der schlauchförmigen Filterschicht vorgesehen ist, dass an einem zweiten Ende der schlauchförmigen Filterschicht ein erster Auslass, der aus dem Innenraum führt, vorgesehen ist und dass an einer Außenseite der schlauchförmigen Filterschicht ein zweiter Auslass vorgesehen ist. Hierdurch kann die Filterschicht durchströmt werden, wobei stets ein Abtransport von Filterrückständen möglich ist. Speziell wird die Bildung eines Filterkuchens vermieden und ein möglicherweise entstandener Filterkuchen kann verhältnismäßig leicht abgespült werden.

Außerdem ist es vorteilhaft, dass die elastisch verformbare Filterschicht in einem Ausgangszustand vorgespannt ist. Hierdurch kann der mechanische Mechanismus zur Verformung der Filterschicht vereinfacht werden.

Bevorzugte Ausführungsbeispiele der Erfindung sind in der nachfolgenden Beschreibung anhand der beigefügten Zeichnung, in der einander entsprechende Elemente jeweils mit übereinstimmenden Bezugszeichen versehen sind, näher erläutert. Es zeigen:
Fig. 1 ein wasserführendes Haushaltsgerät mit einem Filter in einer auszugsweisen, schematischen Schnittdarstellung entsprechend einem ersten Ausführungsbeispiel;
Fig. 2 den in Fig. 1 mit II bezeichneten Ausschnitt einer elastisch verformbaren Filterschicht des Filters des Haushaltsgeräts in einer auszugsweisen, schematischen Schnittdarstellung entsprechend dem ersten Ausführungsbeispiel der Erfindung;
Fig. 3 den in Fig. 2 dargestellten Ausschnitt der elastisch verformbaren Filterschicht des Filters des Haushaltsgeräts des ersten Ausführungsbeispiels in einem möglichen Betriebszustand;
Fig. 4 den in Fig. 2 dargestellten Ausschnitt der elastisch verformbaren Filterschicht des Filters des Haushaltsgeräts des ersten Ausführungsbeispiels in einem weiteren möglichen Betriebszustand;
Fig. 5 den in Fig. 2 dargestellten Ausschnitt der elastisch verformbaren Filterschicht des Filters des Haushaltsgeräts in einer auszugsweisen, schematischen Schnittdarstellung entsprechend einem zweiten Ausführungsbeispiel der Erfindung und
Fig. 6 ein Filter des in Fig. 1 dargestellten Haushaltsgeräts in einer auszugsweisen, schematischen Schnittdarstellung entsprechend einem dritten Ausführungsbeispiel der Erfindung.

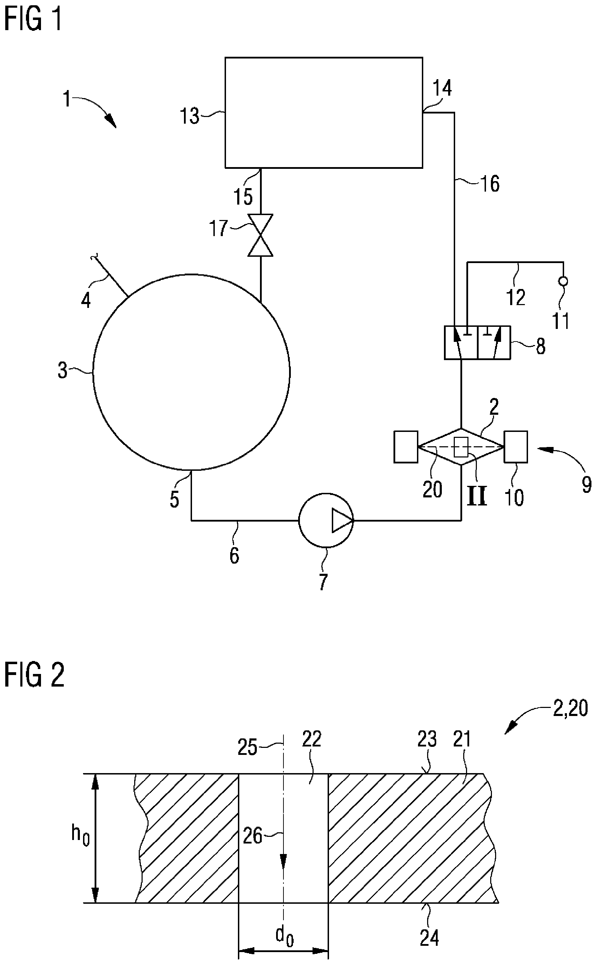

Fig. 1 zeigt ein wasserführendes Haushaltsgerät 1 mit einem Filter 2 in einer auszugsweisen, schematischen Schnittdarstellung entsprechend einem ersten Ausführungsbeispiel. Das Haushaltsgerät 1 kann insbesondere als Wäschebehandlungsgerät ausgestaltet sein und zum Waschen von Wäsche dienen. Speziell kann das Haushaltsgerät 1 als Waschmaschine oder Waschtrockner ausgestaltet sein. Das Filter 2 eignet sich besonders für solche Haushaltsgeräte 1. Das Haushaltsgerät 1 der Erfindung und das Filter 2 der Erfindung eignen sich in entsprechend angepasster Abwandlung allerdings auch für andere Anwendungsfälle.

Das wasserführende Haushaltsgerät 1 weist einen Behälter 3 auf, der in diesem Ausführungsbeispiel als Laugenbehälter 3 ausgestaltet ist. In den Behälter 3 kann über einen Einspülstutzen 4 Wasser oder ein Gemisch aus Wasser und einem Wäschebehandlungsmittel in den Laugenbehälter 3 geführt werden. An einem Ausgang 5 des Laugenbehälters 3 ist eine Leitung 6 angeschlossen, in der eine Pumpe 7 angeordnet ist. Die Pumpe 7 ist in diesem Ausführungsbeispiel als Laugenpumpe 7 ausgestaltet. Ferner ist in der Leitung 6 das Filter 2 angeordnet. Das Filter 2 befindet sich hierbei in Strömungsrichtung beziehungsweise in Pumprichtung der Pumpe 7 betrachtet hinter der Pumpe 7. In Strömungsrichtung betrachtet befindet sich hinter dem Filter 2 ein Schaltventil 8.

Das Filter 2 ist Teil eines Filtersystems 9, das neben dem Filter 2 auch eine mechanische Betätigungseinrichtung 10 aufweist.

Das Haushaltsgerät 1 weist einen Ausgang 11 auf, der beispielsweise mit einer Abwasserleitung eines Hauses verbindbar ist. Zu dem Ausgang 11 führt eine mit dem Schaltventil 8 verbundene Leitung 12. Außerdem weist das Haushaltsgerät 1 einen Tank 13 auf, der einen Eingang 14 und einen Ausgang 15 aufweist. Der Eingang 14 des Tanks 13 ist über eine Leitung 16 mit dem Schaltventil 8 verbunden. Der Ausgang 15 des Tanks 13 ist über ein schaltbares Sperrventil 17 mit dem Laugenbehälter 3 verbunden.

In der in der Fig. 1 dargestellten Schaltstellung des Schaltventils 8 kann durch Betätigen der Pumpe 7 ein Medium, insbesondere Wasser, aus dem Laugenbehälter 3 in den Tank 13 gefördert werden. Der Tank 13 dient hierbei zum vorübergehenden Speichern des Mediums, insbesondere eines Spülwassers. Somit kann ein Teil des zugeführten Wassers wiederverwendet werden, so dass der gesamte Wasserverbrauch reduziert ist. Durch Umschalten des Schaltventils 8 kann der Ausgang 11 angewählt werden, um Abwasser endgültig aus dem Haushaltsgerät 1 zu pumpen.

Das Filter 2 weist eine elastisch verformbare Filterschicht 20 auf. Die elastisch verformbare Filterschicht 20 kann mittels der Betätigungseinrichtung 10 mit einer Kraft beziehungsweise einer mechanischen Spannung beaufschlagt werden, um die elastisch verformbare Filterschicht 20 zu strecken und/oder zu stauchen.

Fig. 2 zeigt den in Fig. 1 mit II bezeichneten Ausschnitt der elastisch verformbaren Filterschicht 20 des Filters 2 in einer auszugsweisen, schematischen Schnittdarstellung entsprechend dem ersten Ausführungsbeispiel. Die elastisch verformbare Filterschicht 20 weist eine ebene Lage 21 auf, in der mehrere offene Ausnehmungen 22 ausgestaltet sind. Hierbei ist zur Vereinfachung der Darstellung nur eine der offenen Ausnehmungen 22 gezeigt. Die offene Ausnehmung 22 ist in diesem Ausführungsbeispiel als zylinderförmige Durchgangsbohrung ausgestaltet. Hierbei weist die offene Ausnehmung 22 einen Durchmesser d₀ und eine Höhe h₀ auf. Die Höhe h₀ entspricht hierbei der Dicke der Lage 21. Die Lage 21 der elastisch verformbaren Filterschicht 20 ist aus einem Werkstoff gebildet, der eine Querdehnzahl von etwa 0,5 aufweist. Beispielsweise kann der Werkstoff auf einem Gummi basieren.

Die offene Ausnehmung 22 hat in Bezug auf ihren Durchmesser d₀ und ihre Höhe h₀ im Ausgangszustand eine gewisse Durchlässigkeit beziehungsweise ein gewisses Rückhaltevermögen. In der Summe bestimmen die offenen Ausnehmungen 22 durch ihre Form die Durchlässigkeit beziehungsweise das Rückhaltevermögen der gesamten Filterschicht 20 des Filters 2.

Die offenen Ausnehmungen 22 können als runde Löcher 22 ausgeführt werden, wie es in der Fig. 2 dargestellt wird. Allerdings sind auch andere Ausgestaltungen möglich. Insbesondere ist auch eine Ausgestaltung mit einem ovalen, einem rechteckigen, insbesondere quadratischen, oder schlitzförmigen Querschnitt möglich.

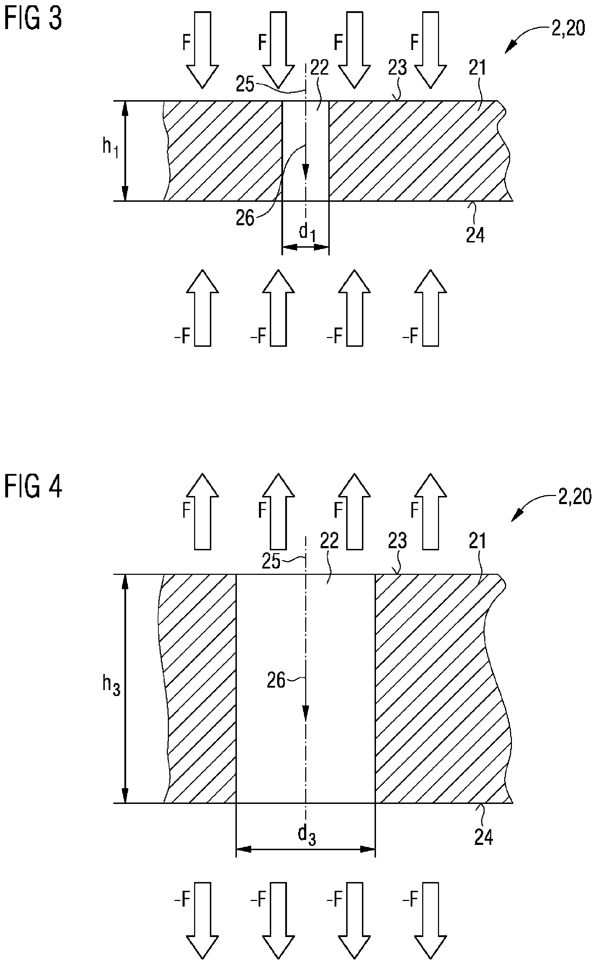

Fig. 3 zeigt den in Fig. 2 dargestellten Ausschnitt der elastisch verformbaren Filterschicht 20 des Filters 2 in einer auszugsweisen, schematischen Schnittdarstellung entsprechend dem ersten Ausführungsbeispiel in einem möglichen Betriebszustand. Hierbei übt die Betätigungseinrichtung 10 eine Kraft F und eine entgegengesetzte Kraft -F auf die elastisch verformbare Filterschicht 20 aus. Die elastisch verformbare Filterschicht 20 weist eine erste Filterseite 23 und eine zweite Filterseite 24 auf, die voneinander abgewandt sind. Die Kraft F wirkt möglichst gleichmäßig auf die erste Filterseite 23 ein, während die Kraft -F möglichst gleichmäßig auf die zweite Filterseite 24 einwirkt. Hierdurch wird die elastisch verformbare Filterschicht 20 gestaucht.

Die offene Ausnehmung 22, die als Durchgangsbohrung ausgestaltet ist, weist eine Achse 25 auf. Entlang der Achse 25 erstreckt sich die Ausnehmung 22 in einer Erstreckungsrichtung 26 durch die Filterschicht 20. In diesem Ausführungsbeispiel ist die Erstreckungsrichtung 26 senkrecht zu der ersten Filterseite 23 beziehungsweise der zweiten Filterseite 24. In dem in der Fig. 3 veranschaulichten Betriebszustand wirkt die Kraft F in der Erstreckungsrichtung 26, während die Kraft -F entgegen der Erstreckungsrichtung 26 wirkt. Somit erfolgt die Stauchung der elastisch verformbaren Filterschicht 20 in der Erstreckungsrichtung 26 beziehungsweise entlang der Achse 25. Hierdurch verringert sich die Höhe der Lage 21 ausgehend von der Höhe h₀ auf die Höhe h₁. Die resultierende Höhe h₁ hängt von der Größe der Kraft F ab. Da für das Material der Lage 21 ein Werkstoff mit einer Querdehnzahl von etwa 0,5 gewählt ist, ergibt sich zumindest näherungsweise ein konstantes Volumen der Lage 21. Dies bedeutet, dass sich das Material der Lage 21 auch in Richtung der offenen Ausnehmung 22, das heißt zu der Achse 25 hin, verschiebt. Hierdurch verringert sich der Durchmesser der offenen Ausnehmung 22 ausgehend von dem Ausgangsdurchmesser d₀ auf den Durchmesser d₁. Es kommt daher zu einer reduzierten Durchlässigkeit an der offenen Ausnehmung 22 und somit in der Summe zu einer geringeren Durchlässigkeit der Filterschicht 20. Dadurch wird die Durchlässigkeit des Filters 2 durch die Beaufschlagung mit den Kräften F, -F geringer. Die Kräfte F, -F werden auf geeignete Weise von der Betätigungseinrichtung 10 auf die Lage 11 übertragen. Hierbei kann die elastisch verformbare Filterschicht 20 durch eine oder mehrere feste Trägerschichten geschützt werden, um ein Durchbiegen der Lage 21 zu vermeiden. Hierbei wird auch ein Durchbiegen in Bezug auf den Druck der Pumpe 7 vermieden.

Bei der anhand der Fig. 3 veranschaulichten Beaufschlagung der Lage 21 bleibt die Grundform der offenen Ausnehmung 22 erhalten und es ändert sich lediglich die Ausdehnung, die in diesem Ausführungsbeispiel durch die Höhe und den Durchmesser bestimmt ist. Somit bleibt die offene Ausnehmung 22 in diesem Ausführungsbeispiel zylinderförmig ausgestaltet.

Es sind auch andere Ausgestaltungen möglich. Vorteilhaft ist es nämlich auch, dass zumindest ein Teil der offenen Ausnehmungen 22 der Filterschicht als Ausnehmungen 22 mit im Ausgangszustand ellipsenförmigen oder eiförmigen Querschnitt oder als quaderförmige Aussparungen 22 ausgestaltet sind. Auch beliebige Kombinationen solcher Ausgestaltungen sind möglich.

Fig. 4 zeigt die elastisch verformbare Filterschicht 20 des Filters 2 des in Fig. 2 dargestellten ersten Ausführungsbeispiels in einem weiteren möglichen Betriebszustand. In diesem Betriebszustand wirkt die auf die erste Filterseite 23 einwirkende Kraft F entgegen der Erstreckungsrichtung 26, die von der ersten Filterseite 23 zu der zweiten Filterseite 24 zeigt. Das heißt, die Kraft F ist von der Lage 21 weg gerichtet. Entsprechend wirkt die Kraft -F in der Erstreckungsrichtung 26 und ist ebenfalls von der Lage 21 weg gerichtet. Die an der ersten Filterseite 23 angreifende Kraft F und die an der zweiten Filterseite 24 angreifende Kraft -F beaufschlagen die Lage 21 mit einer mechanischen Spannung, die zu einem Strecken des Werkstoffs der Filterschicht 20 entlang der Achse 25 führt. Aufgrund der Volumenkonstanz vergrößert sich hierdurch die Ausdehnung der Ausnehmung 22. Somit vergrößert sich die Höhe der Lage 21 von der Ausgangshöhe h₀ auf die Höhe h₃. Entsprechend vergrößert sich der Durchmesser der offenen Ausnehmung 22 von dem Ausgangswert d₀ auf den Wert d₃. Die Höhe h₃ und der Durchmesser d₃ hängen hierbei von der Größe der Kraft F ab. Somit erhöht sich die Durchlässigkeit der Ausnehmung 22. In der Summe erhöht sich die Durchlässigkeit der Filterschicht 20.

Beispielsweise kann die Betätigungseinrichtung 10 die elastisch verformbare Filterschicht 20 in den anhand der Fig. 3 veranschaulichten Betriebszustand versetzen, wenn Wasser in den Tank 13 geführt wird. Wird hingegen Abwasser über den Ausgang 11 aus dem wasserführenden Haushaltsgerät 1 gepumpt, dann kann die Betätigungseinrichtung 10 die elastisch verformbare Filterschicht 20 in den anhand der Fig. 4 veranschaulichten weiteren Betriebszustand versetzen. Hierdurch kann beim Abpumpen ein gewisses Freispülen des Filters 2 erzielt werden. Dadurch wird ein Zusetzen des Filters 2 vermieden.

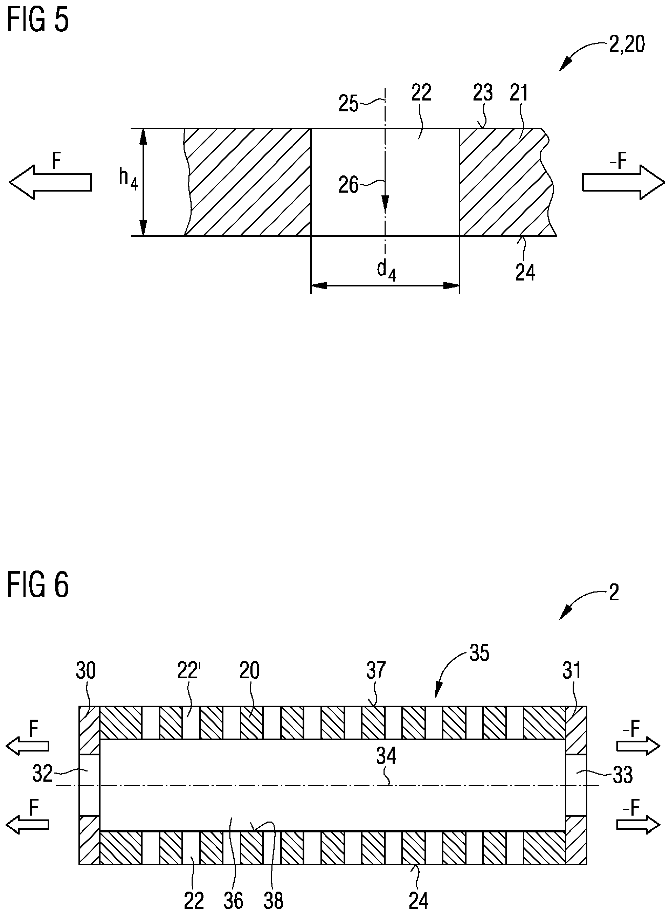

Fig. 5 zeigt den in Fig. 2 dargestellten Ausschnitt einer elastisch verformbaren Filterschicht 20 des Filters 2 eines wasserführenden Haushaltsgeräts 1 in einer auszugsweisen, schematischen Schnittdarstellung entsprechend einem zweiten Ausführungsbeispiel. In diesem Ausführungsbeispiel wirkt die Betätigungseinrichtung 10 in der Ebene der Lage 21 auf die elastisch verformbare Filterschicht 20 ein. Das heißt, exemplarisch dargestellte Kräfte F, -F wirken entgegengesetzt und senkrecht zu der Achse 25 beziehungsweise der Erstreckungsrichtung 26 auf die Filterschicht 20 ein. Die Lage 21 kann hierbei umfänglich nach außen beaufschlagt (gezogen) werden. Hierdurch wird die Lage 21 auf einen größeren Querschnitt beziehungsweise Umfang gestreckt. Durch die Streckung des Materials in der Ebene der Lage 21 nimmt die Höhe der Filterschicht 20 von dem Ausgangswert h₀ auf den Wert h₄ ab. Zugleich werden die Ausnehmungen 22 gewissermaßen aufgezogen, so dass sich der Querschnitt der Ausnehmung 22, insbesondere der Durchmesser, vergrößert. Dadurch wird die Durchlässigkeit der Filterschicht 20 erhöht. In entsprechender Weise kann die Lage 21 auch umfänglich gestaucht werden.

Fig. 6 zeigt ein Filter 2 des in Fig. 1 dargestellten Haushaltsgeräts 1 in einer auszugsweisen, schematischen Schnittdarstellung entsprechend einem dritten Ausführungsbeispiel. In diesem Ausführungsbeispiel ist die Filterschicht 20 als schlauchförmige Filterschicht 20 ausgestaltet. Die Enden der schlauchförmigen Filterschicht 20 sind mit ringförmigen Platten 30, 31 verbunden. An der ringförmigen Platte 30 ist ein Einlass 32 vorgesehen. An der ringförmigen Platte 31 ist ein Auslass 33 vorgesehen. Im Ausgangszustand weist die elastisch verformbare Filterschicht 20 eine Längsachse 34 auf, bezüglich der die Filterschicht 20 eine hohlzylinderförmige Ausgestaltung hat. Der Einlass 32 und der Auslass 33 liegen auf der Längsachse 34.

Die elastisch verformbare Filterschicht 20 weist offene Ausnehmungen 22, 22' auf, wobei zur Vereinfachung der Darstellung nur die Ausnehmungen 22, 22' gekennzeichnet sind. Über die Ausnehmungen 22, 22' kann das zu filtrierende Medium aus der schlauchförmigen Filterschicht 20 zu einem zweiten Auslass 35 gelangen.

Im Betrieb strömt beispielsweise Wasser von dem Einlass 32 in einen Innenraum 36 der schlauchförmigen Filterschicht 20. Vergleichsweise sauberes Wasser kann an dem zweiten Auslass 35, das heißt an der Außenseite 37 der schlauchförmigen Filterschicht 20, gewonnen werden. Sich hierbei an der Innenseite 38 ansammelnder Schmutz oder ein Filterkuchen wird mit dem durchströmenden Wasser mitgenommen.

Je nach Anwendungsfall kann beispielsweise entweder der erste Auslass 33 oder der zweite Auslass 35 geöffnet sein, beispielsweise über ein Schaltventil. Wenn der erste Auslass 33 verschlossen ist, dann wirkt die Filterschicht 20 als Filter. Ist hingegen der zweite Auslass 35 verschlossen, dann wird die Filterschicht 20 durchspült.

Die Durchlässigkeit der elastisch verformbaren Filterschicht 20 kann durch Beaufschlagen der ringförmigen Platten 30, 31 variiert werden. Hierbei übt die Betätigungseinrichtung 10 beispielsweise auf die ringförmige Platte 30 eine Kraft F und auf die ringförmige Platte 31 eine Kraft -F aus. Hierdurch kommt es zu einer gewissen Längung der schlauchförmigen Filterschicht 20 entlang der Achse 34. Dadurch weiten sich die Durchlässe 22, 22', so dass das Rückhaltevermögen der Schlauchmembran reduziert wird. Hierdurch können auch gröbere Partikel durchgelassen werden. Werden die Kräfte F, -F wieder zurückgenommen, dann zieht sich die schlauchförmige Filterschicht 20 wieder in ihre Ausgangslage zusammen, so dass das Rückhaltevermögen zunimmt.

Somit kann ein Filtersystem 9 beziehungsweise ein Filter 2 geschaffen werden, bei dem eine variable, stufenlose Verstellung der Durchlässigkeit des Filters 2 möglich ist. Hierbei können ohne Prozessunterbrechung und ohne zeitliche Verzögerung unterschiedliche Durchlässigkeiten realisiert werden, um beispielsweise zunächst groben Schmutz und später feineren zurückzuhalten. Die Verstellung kann hierbei auf mechanische Weise erfolgen. Gleichzeitig erlaubt das Filtersystem 9 ein vereinfachtes Spülen und Reinigen, bei dem die Durchlässigkeit durch Vergrößern der Ausnehmungen 22, 22' zum Spülen erhöht werden kann. Dadurch kann auch ein eventuell eingedrungener Schmutz leichter aus den Ausnehmungen 22, 22' gelöst werden. Außerdem kann ein möglicherweise entstandener Filterkuchen verhältnismäßig leicht abgespült werden. Eine Veränderung durch Streckung oder Stauchung des Materials unterstützt darüber hinaus das mechanische Ablösen des Filterkuchens. Ein weiterer Vorteil besteht darin, dass je nach Ausgestaltung und Anwendungsfall auf zusätzliche Dichtungen verzichtet werden kann, da die elastisch verformbare Filterschicht 20 gleichzeitig als Dichtung wirken kann.

Bei der Ausgestaltung des Filtersystems 9 kann die Krafteinwirkung auf die Filterschicht 20 zur Streckung und/oder Stauchung auch in anderen Richtungen erfolgen. Insbesondere ist auch eine Kombination der Krafteinwirkungen denkbar, beispielsweise eine Kombination der anhand der Figuren 4 und 5 beschriebenen Krafteinleitungen. Die Filterung kann mit einem verschlossenen Ende oder im Durchfluss erfolgen. Die von der Betätigungseinrichtung 10 auf die Lage 21 ausgeübte mechanische Kraft beziehungsweise mechanische Spannung kann auch zeitlich verändert werden, um zum Beispiel gezielt ein Zusetzen der Filterschicht 20 zu verhindern. Ferner kann das Filter 2 auch mehrere Lagen 21 beziehungsweise Filterschichten 20 aufweisen. Solche Filterschichten 20 können in Reihe oder parallel geschaltet werden.

Zusätzlich oder alternativ kann eine mechanische Spannung beziehungsweise Krafteinwirkung auch über den Druck des zu filternden Mediums erfolgen. Hierbei kann die Krafteinwirkung auch durch den Druck auf der Filtratseite erfolgen. Die offenen Ausnehmungen können auch mit unterschiedlichen Geometrien ausgestaltet sein. Ferner kann die Krafteinleitung in die Lage 21 punktuell und/oder flächig erfolgen.

Die Erfindung ist nicht auf die beschriebenen Ausführungsbeispiele beschränkt.

### Bezugszeichenliste

- 1: Wasserführendes Haushaltsgerät
- 2: Filter
- 3: Behälter
- 4: Einspülstutzen
- 5: Ausgang
- 6: Leitung
- 7: Pumpe
- 8: Schaltventil
- 9: Filtersystem

- 10: Betätigungseinrichtung
- 11: Ausgang
- 12: Leitung
- 13: Tank
- 14: Eingang
- 15: Ausgang
- 16: Leitung
- 17: Sperrventil

- 20: elastisch verformbare Filterschicht
- 21: Lage
- 22: offene Ausnehmung
- 23: erste Filterseite
- 24: zweite Filterseite
- 25: Achse
- 26: Erstreckungsrichtung
- 30, 31: ringförmige Platte
- 32: Einlass
- 33: erster Auslass
- 34: Längsachse
- 35: zweiter Auslass
- 36: Innenraum
- 37: Außenseite
- 38: Innenseite

## Patentansprüche

1. Filtersystem (9), insbesondere für wasserführende Haushaltsgeräte, mit einem Filter (2), das zumindest eine elastisch verformbaren Filterschicht (20) aufweist, und mit einer mechanischen Betätigungseinrichtung (10), wobei die elastisch verformbare Filterschicht (20) mehrere offene Ausnehmungen (22) aufweist, die Poren bilden, und die in der Summe durch ihre Form die Durchlässigkeit bzw. das Rückhaltevermögen der gesamten Filterschicht (20) bestimmen, wobei die elastisch verformbare Filterschicht streck- und/oder stauchbar ist und wobei die elastisch verformbare Filterschicht (20) mittels der Betätigungseinrichtung (10) mit einer Kraft beziehungsweise einer mechanischen Spannung beaufschlagt werden kann, um die elastisch verformbare Filterschicht (20) zu strecken und/oder zu stauchen, wodurch die Porengröße einstellbar ist, **dadurch gekennzeichnet, dass** sich die offenen Ausnehmungen (22) senkrecht zu einer Filterseite (23, 24) der Filterschicht (20) durch die Filterschicht (20) erstrecken und dass die elastisch verformbare Filterschicht (20) entlang oder senkrecht zu der jeweiligen Erstreckungsrichtung (26) der offenen Ausnehmungen (22) streck- und/oder stauchbar ist.

2. Filtersystem (9) nach Anspruch 1, **dadurch gekennzeichnet, dass** zumindest ein Teil der offenen Ausnehmungen (22) der Filterschicht (20) als im Ausgangszustand zylinderförmige Ausnehmungen (20) ausgestaltet sind.

3. Filtersystem (9) nach Anspruch 1 oder 2, **dadurch gekennzeichnet, dass** die elastisch verformbare Filterschicht (20) zumindest im Wesentlichen aus einem Werkstoff gebildet ist, der eine Querdehnzahl von etwa 0,5 aufweist.

4. Filtersystem (9) nach einem der Ansprüche 1 bis 3, **dadurch gekennzeichnet, dass** die elastisch verformbare Filterschicht (20) als ebene Filterschicht (20) ausgestaltet ist.

5. Filtersystem (9) nach einem der Ansprüche 1 bis 3, **dadurch gekennzeichnet, dass** die elastisch verformbare Filterschicht (20) als schlauchförmige Filterschicht (20) ausgestaltet ist.

6. Filtersystem (9) nach Anspruch 5, **dadurch gekennzeichnet, dass** an einem ersten Ende der schlauchförmigen Filterschicht (20) ein Einlass (32) in einen Innenraum (36) der schlauchförmigen Filterschicht (20) vorgesehen ist, dass an einem zweiten Ende der schlauchförmigen Filterschicht (20) ein erster Auslass (33), der aus dem Innenraum (36) führt, vorgesehen ist und dass an einer Außenseite (37) der schlauchförmigen Filterschicht (20) ein zweiter Auslass (35) vorgesehen ist.

7. Filtersystem (9) nach einem der Ansprüche 1 bis 6, **dadurch gekennzeichnet, dass** die elastisch verformbare Filterschicht (20) in einem Ausgangszustand vorgespannt ist.

8. Wasserführendes Haushaltsgerät (1), insbesondere Wäschebehandlungsgerät zum Waschen von Wäsche, mit einem Filtersystem (9) nach einem der Ansprüche 1 bis 7.

## Claims

1. Filter system (9), in particular for water-conducting domestic appliances, with a filter (2), which has at least one resiliently deformable filter layer (20), and with a mechanical actuating facility (10), wherein the resiliently deformable filter layer (20) has a plurality of open recesses (22), which form pores, and which determine the permeability or the retaining capacity of the overall filter layer (20) due to their shape as a whole, wherein the resiliently deformable filter layer can be stretched or compressed and wherein a force or a mechanical tension can be applied to the resiliently deformable filter layer (20) by means of the actuating facility (10), in order to stretch and/or compress the resiliently deformable filter layer (20), whereby the pore size can be set, **characterised in that** the open recesses (22) extend through the filter layer (20) perpendicularly to a filter side (23, 24) of the filter layer (20) and the resiliently deformable filter layer (20) can be stretched and/or compressed along or perpendicularly to the respective extension direction (26) of the open recesses (22).

2. Filter system (9) according to claim 1, **characterised in that** at least some of the open recesses (22) of the filter layer (20) are embodied as cylindrical recesses (20) in the initial state.

3. Filter system (9) according to claim 1 or 2, **characterised in that** the resiliently deformable filter layer (20) is at least substantially formed from a material having a Poisson's ratio of approx. 0.5.

4. Filter system (9) according to one of claims 1 to 3, **characterised in that** the resiliently deformable filter layer (20) is designed as a flat filter layer (20).

5. Filter system (9) according to one of claims 1 to 3, **characterised in that** the resiliently deformable filter layer (20) is designed as a tubular filter layer (20).

6. Filter system (9) according to claim 5, **characterised in that** an inlet (32) into an interior (36) of the tubular filter layer (20) is provided at a first end of the tubular filter layer (20), a first outlet (33) that leads out from the interior (36) is provided at a second end of the tubular filter layer (20) and a second outlet (35) is provided at an exterior (37) of the tubular filter layer (20).

7. Filter system (9) according to one of claims 1 to 3, **characterised in that** the resiliently deformable filter layer (20) is pre-tensioned in an initial state.

8. Water-conducting domestic appliance (1), in particular laundry treatment appliance for washing laundry, with a filter system (9) according to one of claims 1 to 7.

## Revendications

1. Système de filtre (9) en particulier pour appareils ménagers à circulation d'eau, doté d'un filtre (2) présentant au moins une couche filtrante (20) élastiquement déformable et avec un dispositif d'actionnement (10) mécanique, la couche filtrante (20) élastiquement déformable présentant plusieurs creux ouverts (22) formant des pores et qui ensemble déterminent par leur forme la pénétrabilité resp., selon le cas, la capacité de rétention de toute la couche filtrante (20), la couche filtrante élastiquement déformable étant extensible et/ou compressible et la couche filtrante (20) élastiquement déformable pouvant être sollicitée au moyen du dispositif d'actionnement (10) avec une force ou, selon le cas, une contrainte mécanique pour étendre et/ou comprimer la couche filtrante (20) élastiquement déformable, la grosseur des pores étant ainsi réglable, **caractérisé en ce que** les creux ouverts (22) s'étendent par la couche filtrante (20) à la perpendiculaire d'un côté du filtre (23, 24) de la couche filtrante (20) et **en ce que** la couche filtrante (20) élastiquement déformable peut s'étendre et/ou être comprimée le long ou à la perpendiculaire du dispositif respectif d'extension (26) des creux ouverts (22).

2. Système de filtre (9) selon la revendication 1, **caractérisé en ce qu'**au moins une partie des creux ouverts (22) de la couche filtrante (20) sont réalisés dans un premier état sous forme de creux cylindriques (20).

3. Système de filtre (9) selon la revendication 1 ou 2, **caractérisé en ce que** la couche filtrante (20) élastiquement déformable est formée au moins pour l'essentiel d'une matière présentant un indice d'allongement transversal d'environ 0,5.

4. Système de filtre (9) selon l'une des revendications 1 à 3, **caractérisé en ce que** la couche filtrante (20) élastiquement déformable est réalisée sous forme de couche filtrante (20) plane.

5. Système de filtre (9) selon l'une des revendications 1 à 3, **caractérisé en ce que** la couche filtrante (20) élastiquement déformable est réalisée sous forme de couche filtrante (20) tubulaire.

6. Système de filtre (9) selon la revendication 5, **caractérisé en ce qu'**à une première extrémité de la couche filtrante (20) tubulaire est prévue une admission (32) dans un espace intérieur (36) de la couche filtrante (20) tubulaire, **en ce qu'**à une deuxième extrémité de la couche filtrante (20) tubulaire, une première décharge (33), conduisant hors de l'espace intérieur (36), est prévue et **en ce qu'**à un côté extérieur (37) de la couche filtrante (20) tubulaire est prévue une deuxième décharge (35).

7. Système de filtre (9) selon l'une des revendications 1 à 6, **caractérisé en ce que** la couche filtrante (20) élastiquement déformable est dans un état initial, précontrainte.

8. Appareil ménager (1) à circulation d'eau, en particulier appareil de traitement de linges destiné au lavage de linge, équipé d'un système de filtre (9) selon l'une des revendications 1 à 7.
